# EUROPÄISCHE PATENTANMELDUNG

(11) **EP 2 169 460 A2**
(43) Veröffentlichungstag der Anmeldung: **31.03.2010**
(21) Anmeldenummer: 09162650.7
(22) Anmeldetag: 15.06.2009
(51) Int. Cl.: G03B 13/20

(54) **Kamerasystem zur Aufnahme bewegter Objekte**

(30) Priorität: 30.07.2008 DE 102008035424
(71) Anmelder: Siemens Aktiengesellschaft Österreich, 1210 Wien (AT)
(72) Erfinder: Birchbauer, Josef Alois, 8054 Seiersberg (AT); Hennecke, Marcus, 8045 Graz (AT)
(74) Vertreter: Maier, Daniel Oliver

(57) **Zusammenfassung**

Kamerasystem zur Aufnahme bewegter Objekte, insbesondere Fahrzeuge, bestehend aus einer Auswerteeinrichtung (AE) und einer an diese Auswerteeinrichtung (AE) angeschlossenen digitalen Kamera (K) mit festem Fokus und einem an diese Auswerteeinrichtung (AE) angeschlossenen Laserentfernungsmesser (L), welcher die Aufnahme auslöst.

## Beschreibung

### Technisches Gebiet

Die Erfindung betrifft ein Kamerasystem für bewegte Objekte, insbesondere für Aufnahmen von Fahrzeugen.

### Stand der Technik

Die fotografische Aufnahme von schnellbewegenden Objekten ist ein häufig auftretendes Problem, zu dessen Lösung einerseits der Fokus des Kameraobjektivs kontinuierlich an den aktuellen Abstand zwischen der Kamera und dem aufzunehmenden Objekt angepasst werden muss, oder der Fokus wird auf eine bestimmte, vorgegebene Aufnahmeentfernung eingestellt und die Aufnahme exakt beim Durchlaufen des Objekts durch diesen Abstand ausgelöst. Allgemein werden die mit solchen Aufnahmesituationen entstehenden Probleme geringer, je kürzer die Verschlußzeit der Kamera eingestellt werden kann. Eine kürzere Verschlußzeit bedingt allerdings eine größere Blendenöffnung und damit einen geringeren Bereich an Schärfentiefe oder eine höhere Empfindlichkeit des Filmmaterials. Konventionelles, chemisch zu entwickelndes Filmmaterial wurde in den letzten Jahren in praktisch allen Anwendungsgebieten durch digitale Bildsensoren (z.B. sogenannte CMOS Sensoren oder CCD Sensoren) abgelöst.
Ein typischer Anwendungsfall, in welchem schnellbewegte Objekte fotographiert werden, ist die Verkehrsüberwachung. Die üblichen Vorrichtungen, beispielsweise zur automatischen Geschwindigkeitsüberwachung umfassen eine Kamera (digital oder mit konventionellem Filmmaterial), eine Geschwindigkeitsbestimmungseinrichtung (Radar) und eine elektrische Blitzvorrichtung zur Beleuchtung in sonst ungenügenden Lichtverhältnissen. Solche Vorrichtungen werden in großer Zahl zur Geschwindigkeitsüberwachung oder zur Überwachung von Kreuzungen (sogenannte Rotlichtkameras) eingesetzt. Diesen Anwendungsfällen ist gemein, dass es ausreicht auf damit aufgenommenen Bildern das Kennzeichen des Fahrzeugs (Nummerntafel) einwandfrei erkennen zu können, bzw. die Identifikation des Lenkers möglich sein muss.

Eine weitere Anwendung solcher Kamerasysteme ist die Überwachung von bestimmten Details von Fahrzeugen, insbesondere die Gültigkeit von Mautplaketten (Vignetten, Aufklebern, etc.). Diese Plaketten stellen wesentlich höhere Anforderungen an die fotografischen Überwachungsvorrichtungen als die Geschwindigkeitsüberwachung, da deutlich kleinere Details erfasst und zweifelsfrei beurteilt werden müssen. Beispielsweise muss die Auflösung einer Aufnahme einer österreichischen Autobahnmautplakette mindestens ein Millimeter betragen um die, die Gültigkeit der Plakette bestimmende Lochung eindeutig identifizieren zu können. Da die Erkennung naturgemäß über die gesamte Fahrbahnbreite erfolgen können muss, ist bei einer Fahrbahnbreite von 3,5 Metern eine Pixelzahl von 3500 Pixel erforderlich. Diese hohen Auflösungen bedingen, dass bereits geringe Bewegungsunschärfen oder Fehlfokussierungen die Erkennung solch kleiner Details verunmöglichen.

Eine Möglichkeit zur Lösung solcher fotographischen Aufgaben liegt im Einsatz von sogenannten Zeilenkameras, welche kontinuierlich Aufnahmen des bewegten Objekts, senkrecht zur Bewegungsrichtung anfertigen und aus diesen Einzel(zeilen)bildern ein Gesamtbild zusammensetzen, wobei es erforderlich ist, die Bewegungsgeschwindigkeit des Objekts (Fahrzeugs) zu bestimmen (oder zumindest zu schätzen) um ein korrektes Zusammenfügen der Einzelaufnahmen durchführen zu können. Mittels dieser Zeilenkameras ist es nicht möglich, gleichzeitig in einer Aufnahme das Kennzeichen eines Fahrzeugs zu erfassen, da die Aufnahmerichtung von Zeilenkameras zwangsläufig senkrecht zur Bewegungsrichtung (von oben) ist. Somit ist eine zweite, das Kennzeichen erfassende Kamera erforderlich, wobei die Identität des Fahrzeugs auf beiden Aufnahmen (Kennzeichen von vorne und Zeilenkameraaufnahme von oben) nachgewiesen werden muss.
Ein weiterer Nachteil des Einsatzes von Zeilenkameras ist der erforderliche hohe Beleuchtungspegel, welcher sehr leuchtkräftige Blitzgeräte bzw. Scheinwerfer erforderlich macht, die im Straßenverkehr aus Sicherheitsgründen nicht eingesetzt werden.
Eine weitere Möglichkeit wäre es, die Kamera beweglich zu gestalten, sodaß sie auf kurzer Strecke mit dem Fahrzeug in gleicher Geschwindigkeit mitbewegt wird und somit das Problem der Bewegungsunschärfe entfällt, dafür allerdings ein hoher Aufwand zur Geschwindigkeitsbestimmung und zum Antrieb der beweglichen Kamera betrieben werden müsste.

### Darstellung der Erfindung

Der Erfindung liegt daher die Aufgabe zugrunde, ein Kamerasystem zur Aufnahme bewegter Objekte, insbesondere für Aufnahmen von Fahrzeugen anzugeben, welche die Nachteile des Stands der Technik vermeidet.

Die Aufgabe wird durch ein System mit den Merkmalen des Anspruchs 1 gelöst. Vorteilhafte Ausgestaltungen sind Gegenstand von abhängigen Ansprüchen.

Dem Grundgedanken der Erfindung nach wird ein Kamerasystem zur Aufnahme bewegter Objekte aus einer Auswerteeinrichtung und einer an diese Auswerteeinrichtung angeschlossenen digitalen Kamera mit festem Fokus aufgebaut, wobei mittels eines senkrecht zur Bewegungsrichtung des aufzunehmenden Objekts ausgerichteten Laserentfernungsmessers die Auslösung der Aufnahme bewirkt wird, wenn das bewegte Objekt die Fokusebene der Kamera durchdringt.

Der Hauptaspekt der erfindungsgemäß vorgeschlagenen Lösung liegt darin, dass eine hochauflösende Kamera mit einem auf eine bestimmte Entfernung eingestelltem Fokus eine Aufnahme des bewegten Objekts aufnimmt, sobald von einer weiteren Vorrichtung (Laserentfernungsmesser) die Anwesenheit des Objekts in der Fokusebene festgestellt wird.
Hochauflösende digitale Kameras besitzen aufgrund ihrer Bauweise, besonders aufgrund der geringen Abmessungen der einzelnen Pixel, nur eine geringe Lichtempfindlichkeit. Um mit solchen Kameras, die allerdings für die Erkennung feiner Details (wie der Lochung einer Mautplakette) erforderlich sind, unter Berücksichtigung der hohen Geschwindigkeit der bewegten Objekte (Fahrzeuge) Aufnahmen mit nur geringer Bewegungsunschärfe anfertigen zu können sind einerseits Objektive mit hoher Lichtstärke und offener Blende erforderlich als auch eine starke und gleichmäßige Beleuchtung des Aufnahmefelds. Die dazu erforderliche Leuchtstärke von elektronischen Blitzgeräten wäre für den Einsatz im Straßenverkehr nicht akzeptabel, da eine Blendwirkung auf die Fahrzeuglenker einwirken würde. Deshalb ist es empfehlenswert, eine Infrarotkamera und Infrarot-Blitzgeräte einzusetzen wobei ein aus Infrarot Leuchtdioden aufgebautes Blitzgerät besonders vorteilhaft (preisgünstig) ist.

Die geringe Schärfentiefe von Objektiven mit hoher Lichtstärke und weit geöffneter Blende erfordert eine besonders präzise Lokalisation des bewegten Objekts (Fahrzeugs), sodass eine Aufnahme exakt in jenem Zeitpunkt erfolgt, ich welchem die relevanten Teile des Objekts (z.B. Frontscheibe mit Mautplakette) die Fokusebene der Kamera (bzw. des Objektivs) durchdringt. Zur Erkennung weiterer Details, insbesondere des Fahrzeugkennzeichens ist eine solcherart exakte Aufnahme nicht erforderlich, da die Schriftzeichen eines Fahrzeugkennzeichens wesentlich größer als die erkennungsrelevanten Details einer Mautplakette sind. Eine derart exakte Lokalisierung des Aufnahmeobjekts wird besonders vorteilhaft mittels eines Laserentfernungsmessers vorgenommen.
Laserentfernungsmesser, welche auf der Laufzeitmessung von Laserimpulsen (vom Laser zum Objekt und zurück) beruhen, sind unabhängig von der aktuellen Beleuchtungssituation des Aufnahmefelds und in großem Maß unabhängig von der Wettersituation am Einsatzort. Extreme Wetterbedingungen wie Schnee- oder Sandstürme oder starker Regen beeinträchtigen die Messungen von Laserentfernungsmessern wesentlich geringer als beispielsweise optische oder Radarentfernungsmesser.
Ein weiterer Vorteil des Einsatzes von Laserentfernungsmessern liegt darin, dass Laserentfernungsmesser in Straßenmautkontrollstationen bereits oftmals eingesetzt werden, um die Kategorie der Fahrzeuge zu bestimmen. Besondere Ausführungsformen von Laserentfernungsmessern (sogenannte Laserscanner mit mehreren Laserstrahlen oder einem zeilenförmig bewegten Laserstrahl) erfassen die Volumensumrisse (3dimensionales Profil) des Fahrzeugs und ermöglichen eine Klassifikation (z.B. PKW, LKW, Klein-LKW, Anhänger). Dies ermöglicht es, abhängig von der Fahrzeugklasse unterschiedliche Eigenschaften des erfassten Bildes auszuwerten. Beispielsweise ist in Österreich eine Suche nach einer Mautplakette am Bild eines LKW nicht sinnvoll, da LKW die Maut mittels eines anderen Verfahrens entrichten.
Ein mittels Laserentfernungsmessern oder Laserscannern aufgebautes Kamerasystem kann besonders vorteilhaft an weitere Vorrichtungen zur Fahrzeugkontrolle von Straßenmautsystemen angeschlossen werden und in vorhandene bauliche (sogenannte Mautbrücken) und elektronische Infrastruktur integriert werden.

Eine weitere bevorzugte Ausführungsform sieht vor, die Lokalisation des Aufnahmeobjekts mittels Ultraschall- oder Infrarotdetektoren (Sensoren) vorzunehmen, wobei der (teure) Laserentfernungsmesser bzw. Laserscanner entfällt. Dadurch läßt sich ein erfindungsgemäßes Kamerasystem wesentlich preiswerter aufbauen. Besonders in Anwendungsfällen, in welchen eine Fahrzeugklassifikation nicht erforderlich ist, können Ultraschall- oder Infrarotdetektoren vorzugsweise eingesetzt werden. Infrarot und kombinierte Infrarot/Ultraschalldetektoren zur Verwendung in einem erfindungsgemäßen Kamerasystem werden beispielsweise von der Fa. Xtralis Ltd. hergestellt (Baureihe IR200 oder DT270).

Eine bevorzugte Ausführungsform der Erfindung sieht vor, dass das Aufnahmefeld von mehreren hochauflösenden Kameras erfasst wird, welche alle dieselbe Fokusebene aufweisen und deren Bildbereiche sich überlappen und welche gleichzeitig ausgelöst werden. Die solcherart entstehenden Aufnahmen werden zu einem Gesamtbild zusammengesetzt, was aufgrund der Überlappung der einzelnen Bildbereiche automatisiert erfolgen kann. (engl. "Photo-stitching")
Dadurch ist der Vorteil erzielbar, dass einerseits preisgünstigere (weniger hoch auflösende) Kameras eingesetzt werden können, oder ein wesentlich detailliertes Gesamtbild des Aufnahmefeldes erzielt wird.

Eine zweckmäßige Weiterbildung der Erfindung sieht vor, eine Erkennungsvorrichtung zu integrieren, welche die erkennungswesentlichen Details (beispielsweise die Lochungen und Beschriftungen der österreichischen Straßenmautplaketten) analysiert und alle Bilder mit als gültig erkannten Plaketten löscht und alle Bilder mit ungültigen oder nicht eindeutig als gültig erkannten Plaketten in einem Bildspeicher auslesbar abspeichert, wodurch eine manuelle Kontrolle dieser Aufnahmen erfolgen kann. Diese Erkennungvorrichtung kann durch den Einsatz von retroreflektierenden Plaketten diese Analyse beschleunigt vornehmen, da insbesondere die Lage einer retroreflektierenden Plakette im Bild bevorzugt erkennbar ist, wobei der Einsatz einer Blitzlampe (sichtbares oder Infrarotlicht) diesen Erkennungsvorgang zusätzlich beschleunigt.

Eine vorteilhafte Ausgestaltung der Erfindung sieht vor, die automatisierte Kontrolle auf weitere Bilddetails, wie beispielsweise auf von den Fahrzeuginsassen angelegte Sicherheitsgurte, die Verwendung von Mobiltelefonen durch den Fahrzeuglenker oder ähnliches zu erweitern.

Eine weitere günstige Ausgestaltung der Erfindung sieht vor, die automatisierte Kontrolle auf die Gültigkeit sogenannter Überprüfungsplaketten (z.B. österreichische §57a Plaketten oder deutsche "Umweltplaketten") anzuwenden, welche ähnliche erkennungswesentliche Details (Lochungen und Beschriftungen) aufweisen.

Die wesentlichen Vorteile eines erfindungsgemäßen Kamerasystems liegen in der Möglichkeit hochauflösende Aufnahmen schnellbewegter Objekte, insbesonders Fahrzeugen, anzufertigen, welche jeweils in gleicher räumlichen Position zur Kamera erfasst werden und wobei die wesentlichen Bildinhalte (z.B. Fahrzeugkennzeichen und Mautplakette) gemeinsam auf einem Bild erfasst werden.
Ein weiterer Vorteil des erfindungsgemäßen Kamerasystems liegt darin, dass keinerlei (wartungsintensive) bewegte Teile erforderlich sind.

### Kurzbeschreibung der Zeichnungen

Es zeigen beispielhaft:
**Fig. 1** die Darstellung des prinzipiellen Aufbaus eines erfindungsgemäßen Kamerasystems.
**Fig. 2** die Darstellung des prinzipiellen Aufbaus eines erfindungsgemäßen Kamerasystems mit drei parallelen Kameras.

### Ausführung der Erfindung

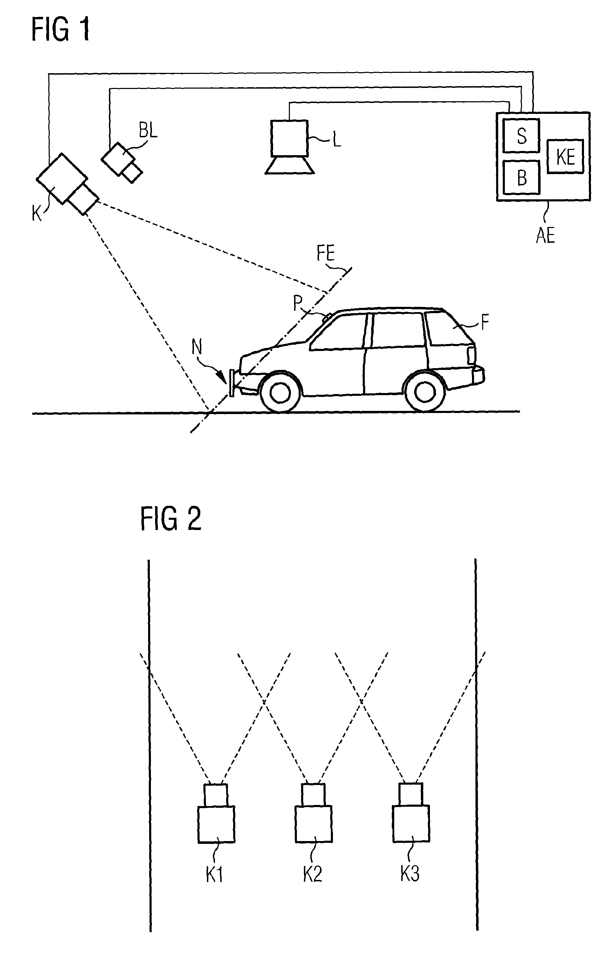

**Fig.1** zeigt beispielhaft und schematisch den prinzipiellen Aufbau eines erfindungsgemäßen Kamerasystems zum Einsatz für die Kontrolle der Gültigkeit von Mautplaketten.
Es ist ein Kamerasystem dargestellt, welches eine digitale Kamera K, einen Laserentfernungsmesser L, eine Blitzlampe BL und eine Auswerteeinrichtung AE umfasst. Die digitale Kamera K umfasst ein Objektiv, welches auf die optimal scharfe Abbildung von Objekten in der Fokusebene FE eingestellt ist. Die Auswerteeinrichtung AE umfasst eine Steuereinrichtung S, einen Bildspeicher B und eine Kommunikationseinrichtung KE. Weitere für die Funktion der Auswerteeinrichtung AE erforderliche Baugruppen, wie eine Energieversorgung sind nicht dargestellt.
Ein Fahrzeug F mit einem Fahrzeugkennzeichen N und einer an der Frontscheibe angebrachten Plakette P durchläuft den Erfassungsbereich des Laserentfernungsmessers L (im dargestellten Beispiel von rechts nach links). Der Laserentfernungsmessers L ist über der Fahrbahn angebracht und misst kontinuierlich die Entfernung zwischen dem Laserentfernungsmesser L und der Fahrbahn, bzw. wenn ein Fahrzeug den Erfassungsbereich des Laserentfernungsmessers L durchfährt den Abstand zwischen dem Laserentfernungsmesser L und der Fahrzeugoberfläche. Der Laserentfernungsmesser L sendet die gemessenen Abstandsdaten kontinuierlich an die Steuereinrichtung S, welche bei Unterschreiten eines bestimmten vorgebbaren Abstands einen Auslösebefehl an die digitale Kamera K und (falls erforderlich) auch an die Blitzlampe BL absendet. Das daraufhin von der Kamera K erfasste digitale Bild wird von der Kamera K an die Steuereinrichtung S übertragen und von der Steuereinrichtung S in einem Bildspeicher B abgespeichert. Diese, im Bildspeicher B abgespeicherten digitalen Bilder werden mittels der Kommunikationseinrichtung KE an eine (nicht dargestellte) zentrale Bildarchivierungs- und Verarbeitungseinrichtung gesandt.
Die Bildanalyse mittels einer Bildverarbeitungseinrichtung kann auch in der Auswerteeinrichtung AE erfolgen, dazu ist gegebenenfalls die erforderliche Rechenleistung in der Steuereinrichtung oder einer weiteren Baugruppe vorzuhalten, was vorteilhaft die erforderliche Kapazität des Bildspeichers B reduziert.

**Fig.2** zeigt beispielhaft und schematisch den prinzipiellen Aufbau eines erfindungsgemäßen Kamerasystems mit drei parallelen Kameras für eine Fahrspur.
Es ist eine Ausführungsform des erfindungsgemäßen Kamerasystems dargestellt, wobei drei digitale Kameras K1, K2, K3 gemeinsam das Aufnahmefeld erfassen und jede der digitalen Kameras K1, K2, K3 einen Teilbereich des Aufnahmefeldes erfassen und sich diese Teilbereiche überlagern. Die drei erfassten Teilbilder werden in der Auswerteeinrichtung zu einem Gesamtbild zusammengesetzt, welches danach für die Bildanalyse herangezogen wird.

### Liste der Bezeichnungen

- F: Fahrzeug
- K, K1, K2,K3: Kamera
- L: Laserentfernungsmesser
- FE: Fokusebene
- BL: Blitzlampe
- N: Fahrzeugkennzeichen
- P: Plakette
- AE: Auswerteeinrichtung
- S: Steuereinrichtung
- B: Bildspeicher
- KE: Kommunikationseinrichtung

## Patentansprüche

1. Kamerasystem zur Aufnahme bewegter Objekte, bestehend aus einer Auswerteeinrichtung (AE) und einer an diese Auswerteeinrichtung (AE) angeschlossenen digitalen Kamera (K) mit festem Fokus und einem an diese Auswerteeinrichtung (AE) angeschlossenen Laserentfernungsmesser (L) **dadurch gekennzeichnet, dass** der Laserentfernungsmesser (L) senkrecht zur Bewegungsrichtung des aufzunehmenden Objekts ausgerichtet ist und die Auslösung der Aufnahme bewirkt, wenn das bewegte Objekt die Fokusebene (FE) der Kamera (K) durchdringt.

2. Kamerasystem gemäß Anspruch 1, **dadurch gekennzeichnet, dass** die Kamera (K) eine Infrarotkamera ist.

3. Kamerasystem gemäß Anspruch 1 oder 2, **dadurch gekennzeichnet, dass** gleichzeitig Aufnahmen von mindestens zwei Kameras (K) ausgelöst werden, deren Bildbereiche sich überlappen und deren Fokusebenen (FE) gleich sind und deren Aufnahmen automatisch zu einem Gesamtbild zusammengesetzt werden.

4. Kamerasystem nach einem der Ansprüche 1 bis 3, **dadurch gekennzeichnet, dass** von der Auswerteeinrichtung (AE) gleichzeitig mit der Kamera (K) eine Blitzlampe (BL) ausgelöst wird.

5. Kamerasystem nach einem der Ansprüche 1 bis 3, **dadurch gekennzeichnet, dass** Durchdringen des Aufnahmeobjekts durch die Fokusebene (FE) der Kamera (K) mittels eines Laserscanners detektiert wird.

6. Kamerasystem nach einem der Ansprüche 1 bis 3, **dadurch gekennzeichnet, dass** Durchdringen des Aufnahmeobjekts durch die Fokusebene (FE) der Kamera (K) mittels eines Ultraschallsensors detektiert wird.

7. Kamerasystem nach einem der Ansprüche 1 bis 3, **dadurch gekennzeichnet, dass** Durchdringen des Aufnahmeobjekts durch die Fokusebene (FE) der Kamera (K) mittels eines Infrarotsensors detektiert wird.

8. Auswerteeinrichtung (AE) zur Verwendung in einem Kamerasystem nach einem der Ansprüche 1 bis 7 **dadurch gekennzeichnet, dass** Mittel vorgesehen sind, welche jedes erfasste Bild auf das Vorhandensein bestimmter Eigenschaften untersuchen und bei Abwesenheit dieser bestimmten Eigenschaften diese Bilder im Bildspeicher (B) abspeichern.
